# EUROPEAN PATENT APPLICATION

(11) **EP 1 760 992 A1**
(43) Date of publication of application: **07.03.2007**
(21) Application number: 05751517.3
(22) Date of filing: 15.06.2005
(51) Int. Cl.: H04M 1/00, H04M 11/00

(54) **COMMUNICATION DEVICE, COMMUNICATION METHOD, AND COMMUNICATION PROGRAM**

(30) Priority: 25.06.2004 JP 2004188745
(71) Applicant: NEC CORPORATION, Minato-ku, Tokyo 108-8001 (JP)
(72) Inventor: SAKATA, Kazuhiro;, , Tokyo;1088001 (JP)
(74) Representative: Vossius & Partner
(86) International application number: PCT/JP2005/010919
(87) International publication number: WO 2006/001200

(57) **Abstract**

Upon reception of a telephone transmission request from a data processing unit 230, a transmission request processing unit 250 decides the transmission method of a communication processing unit 240 according to a data ID of the data being referenced by the data processing unit 230 and transmission judgment information stored in the transmission judgment information storage unit 260. The transmission request processing unit 250 requests the communication processing unit 240 for a telephone transmission by a transmission method based on the aforementioned transmission method. Thus, it is possible to perform telephone transmission by an appropriate method according to the data being referenced by a user.

## Description

### [APPLICABLE FIELD IN THE INDUSTRY]

The present invention relates to a communication device, a communication method, and a program for communication, and more particularly to a communication device, a communication method, and a program for communication that is characterized in transmitting a telephone with an appropriate technique based upon data to which a reference is being made.

### [BACKGROUND ART]

In recent years, with a spread of a network such as Internet and perusal of Web sites employing a browser is flourishing. The technology has been proposed of enabling a telephone transmission function to transmit a telephone by causing a specific link within a Web browser to correspond to a telephone number in perusing these sites, thereby allowing a user to specify the above link (for example, Non-patent document 1). Additionally, as an example of the communication device of this type, there exists a mobile telephone terminal having a Web browser function.
[Non-patent document 1]
http://www.nttdocomo.co.jp/p_s/imode/whats/naiyou.html

### [DISCLOSURE OF THE INVENTION]

### [PROBLEMS TO BE SOLVED BY THE INVENTION]

By the way, there is the case that, in making a telephone by means of a client, the user desires to change a transmission method responding to its purpose and situation. This is just the case that, for example, in a case where the user employs the client for both of a private telephone and a telephone for business, the transmission method of the former is made different from that of the latter, thereby allowing the user itself to bear the cost in making the former, and an enterprise to bear the cost in making the latter.

Conventionally, the user has manually specified such a transmission method.

On the other hand, there is the case that in a case where, during making a reference to data, the user makes a request for transmitting a telephone to a telephone number indicated in the above data, the transmission method is decided depending upon a reference object. As a specific example, there is the case that, for example, ┌the enterprise bears the cost for the telephone transmitted during perusing a specific Web site┘.

However, the conventional system, which requires that the user individually specify the transmission method even in such a case, is complicated.

Thereupon, the present invention has been accomplished in consideration of the above-mentioned problems, and an object thereof is to provide the technology of realizing a communication device that is capable of transmitting a telephone with an appropriate method based upon data to which a reference is being made.

### [MEANS TO SOLVE THE PROBLEM]

The first invention for solving the above-mentioned problems, which is a communication device, is characterized in having: input/output means for carrying out an input/output into/to a user; data processing means having a function of providing data for the user; communication processing means having a function of providing a telephone transmission function for the user; and transmission request processing means has a function of requesting the communication processing unit to transmit a telephone with the transmission method based upon an identifier of the data that the data processing means has provided.

The second invention for solving the above-mentioned problem in the above-mentioned first inventions, is characterized in that said data processing means has a function of, in having received a telephone transmission request having telephone number information, which is included in the data that has been provided, specified from the user, transmitting a telephone transmission request to said transmission request processing means.

The third invention for solving the above-mentioned problem in the above-mentioned first or second inventions, is characterized in that said transmission request processing means has transmission judgment information storage means having a function of filing information that is employed for determining a transmission method.

The fourth invention for solving the above-mentioned problem, in one of the above-mentioned first to third inventions, is characterized in that said transmission request processing means has a function of employing information associated with said communication device and said data, being information other than an identifier of said data, in determining the transmission method.

The fifth invention for solving the above-mentioned problem is characterized in that, in one of the above-mentioned first to fourth inventions, said transmission request processing means has a function of, upon having manipulated a telephone number, being an object of transmission, with an established method based upon the decided transmission method, requesting that a telephone to said manipulated telephone number be transmitted.

The sixth invention for solving the above-mentioned problem is characterized in that a communication device having: storage means having a data identifier for identifying data, which is provided for a user, and a transmission method identifier for identifying a method of telephone transmission based upon said data, which is provided for said user, filed correspondingly to each other; data processing means having a function of providing data for the user; communication processing means having a function of providing a telephone transmission function for the user; and transmission request processing means having a function of retrieving a transmission method identifier caused to correspond to a data identifier of the data, which said data processing means has provided, from said storage means, thereby to request said communication processing unit to transmit a telephone with a transmission method responding to this transmission method identifier.

The seventh invention for solving the above-mentioned problem is characterized in that a communication method of a communication device having a function of providing data for a user and a function of providing a telephone transmission function for the user, characterized in: receiving a request for transmitting a telephone from the user during providing of data; deciding a telephone transmission method based upon an identifier of said data; and transmitting a telephone based upon said telephone transmission method.

The eighth invention for solving the above-mentioned problem, in the above-mentioned seventh invention, is characterized in: in providing the data for the user, based upon telephone number information to be included in the data, providing input support information for transmitting a telephone to said telephone number information; and interpreting an operation for said input support information by said user as a telephone transmission request.

The ninth invention for solving the above-mentioned problem is characterized in that, in the above-mentioned seventh or eighth invention, the filing information that is employed for a process of determining said telephone transmission method.

The tenth invention for solving the above-mentioned problem is characterized in that, in one of the above-mentioned seventh to ninth inventions, the employing information associated with said communication device and said data, being information other than said identifier of said data, in deciding said telephone transmission method.

The eleventh invention for solving the above-mentioned problem, in one of the above-mentioned seventh to tenth inventions, is characterized in manipulating a telephone number, being an object of transmission, with an established method based upon said decision of said telephone transmission method, thereby to transmit a telephone.

The twelfth invention for solving the above-mentioned problem is characterized in that said program causes said communication device to function as: input/output means for carrying out an input/output into/to a user; data processing means having a function of providing data for the user; communication processing means having a function of providing a telephone transmission function for the user; and transmission request processing means having a function of requesting said communication processing unit to transmit a telephone with a transmission method based upon an identifier of the data that said data processing means has provided.

The thirteenth invention for solving the above-mentioned problem is characterized in that, in the above-mentioned twelfth inventions, said program causes said data processing means to function as means for, in having received a telephone transmission request having telephone number information, which is included in the data that has been provided, specified from the user, transmitting the telephone transmission request to said transmission request processing means.

The fourteenth invention for solving the above-mentioned problem is characterized in that, in the above-mentioned twelfth or thirteenth inventions, said program causes said communication device to function as transmission judgment information storage means having a function of filing information that is employed in order for said transmission request processing means to decide a transmission method.

The fifteenth invention for solving the above-mentioned problem is characterized in that, in one of the above-mentioned twelfth to fourteenth inventions, said program causes said transmission request processing means to function so as to employ information associated with said communication device and said data, being information other than said identifier of said data, in deciding the transmission method.

The sixteenth invention for solving the above-mentioned problem is characterized in that, in one of the above-mentioned twelfth to fifteenth inventions, said program causes said transmission request processing means to function so as to manipulate a telephone number, being an object of transmission, with an established method based upon the decided transmission method, and thereafter to request that a telephone to said manipulated telephone number be transmitted.

The seventeenth invention for solving the above-mentioned problem is characterized in that a program of a communication device, characterized in that said program causes said communication device to function as: data processing means having a function of providing data for the user; communication processing means having a function of providing a telephone transmission function for the user; and transmission request processing means having a function of, from storage means having a data identifier for identifying data that is provided for a user, and a transmission method identifier for identifying a method of telephone transmission based upon said data that is provided for said user filed correspondingly to each other, retrieving a transmission method identifier caused to correspond to a data identifier of the data that said data processing means has provided, thereby to request said communication processing unit to transmit a telephone with a transmission method responding to this transmission method identifier.

The eighteenth invention for solving the above-mentioned problem is characterized in that a program of a communication device, characterized in that said program causes said communication device to execute the processes of: receiving a request for transmitting a telephone from a user during providing of data; deciding a telephone transmission method based upon an identifier of said data; and transmitting a telephone based upon said telephone transmission method.

The nineteenth invention for solving the above-mentioned problem is characterized in that, in the above-mentioned eighteenth inventions, said program causes said communication device to execute the processes of: in providing the data for the user, based upon telephone number information that is included in the data, providing input support information for transmitting a telephone to said telephone number information; and interpreting an operation for said input support information by said user as a telephone transmission request.

The twentieth invention for solving the above-mentioned problem, in the above-mentioned eighteenth or nineteenth inventions, is characterized in having information filed, said information being employed for a process of deciding said telephone transmission method.

The twenty-first invention for solving the above-mentioned problem, in one of the above-mentioned eighteenth to twentieth inventions, is characterized in employing information associated with said communication device and said data, being information other than said identifier of said data, in deciding said telephone transmission method.

The twenty-second invention for solving the above-mentioned problem, in one of the above-mentioned eighteenth to twenty-first inventions, is characterized in that said program causes said communication device to execute a process of manipulating a telephone number, being an object of transmission, with an established method based upon said decision of said telephone transmission method, thereby to transmit a telephone.

The present invention pre-stores information for identifying data that is provided for the user, and the method of transmitting a telephone based upon the data that is provided for the user correspondingly to each other. And, when the user transmits a telephone associated with data to which a reference is being made, it transmits a telephone with the transmission method caused to correspond to information for identifying data to which a reference is being made.

For example, in the case of, during perusing a specific Web site for a purpose of a certain work, transmitting a telephone in this Web site, or the like, its telephone is a telephone relating to the work. Thus, the transmission method of this telephone is a transmission method of allowing the cost to be charged for a company.

### [EFFECTS OF THE INVENTION]

The present invention makes it possible to transmit a telephone with an appropriate method responding to data to which the user is making a reference.

### [BRIEF DESCRIPTION OF THE DRAWINGS]

[Fig. 1] Fig. 1 is a block diagram illustrating a major configuration of a communication system that is an example of the present invention.
[Fig. 2] Fig. 2 is a view illustrating one example of data that is filed into a transmission judgment information storage unit of a client of a communication system that is an example of the present invention.
[Fig. 3] Fig. 3 is a flowchart illustrating a flow of a process of acquiring/providing data that is performed in a communication system that is an example of the present invention.
[Fig. 4] Fig. 4 is a flowchart illustrating a flow of a telephone transmission request process that is performed in a communication system that is an embodiment of the present invention.
[Fig. 5] Fig. 5 is a flowchart illustrating a flow of a telephone transmission request process that is performed in a communication system that is an embodiment of the present invention.
[Fig. 6] Fig. 6 is a general block configuration view of an information processing system having a configuration of a client 200 of an example 1 implemented.

### [DESCRIPTION OF NUMERALS]

- 50: network
- 100: server
- 200: client
- 210: communicator
- 220: inputter/outputter
- 230: data processing unit
- 240: communication processing unit
- 250: transmission request processing unit
- 260: transmission judgment information storage unit

### [BEST MODE FOR CARRYING OUT THE INVENTION]

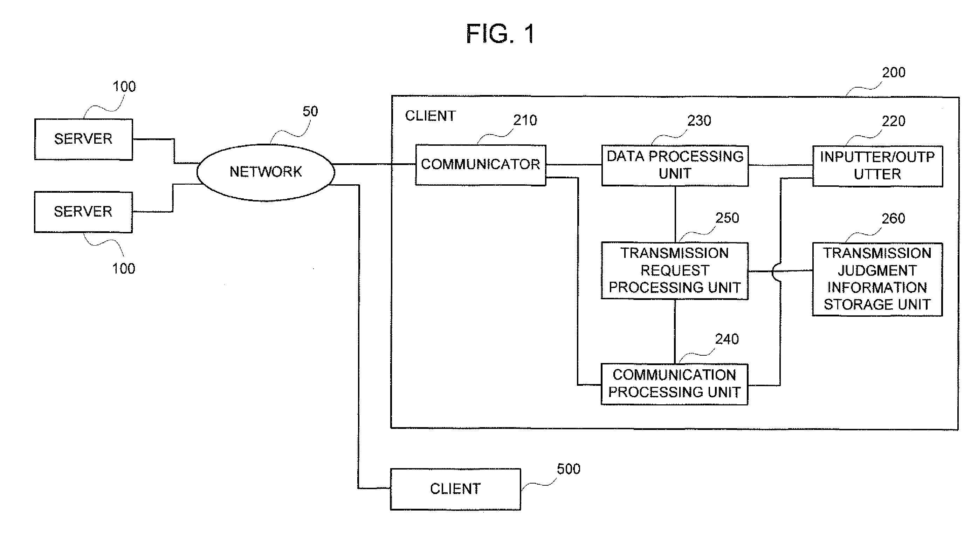

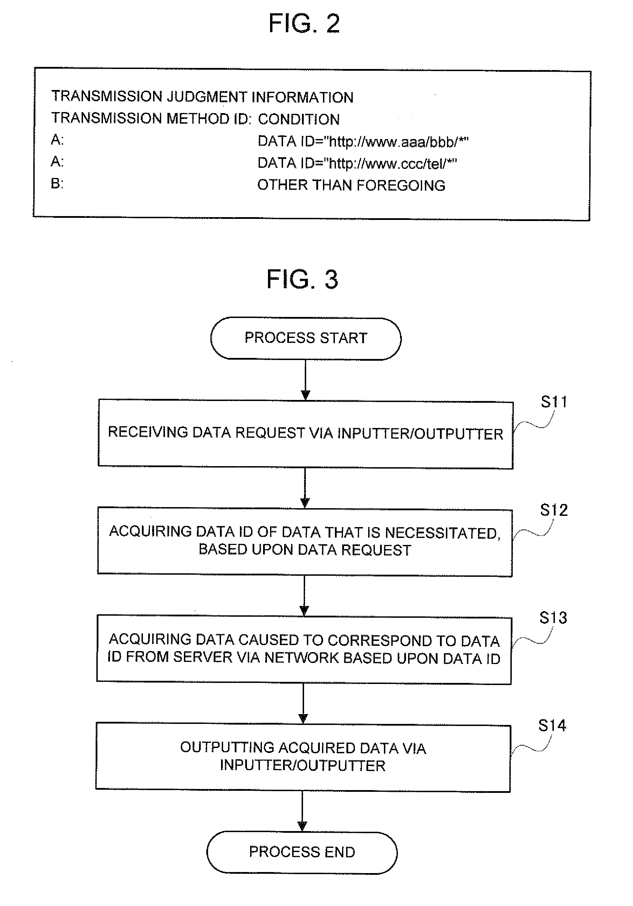

In the present invention, as shown in Fig. 1, a transmission judgment information storage unit 260 has a data ID for identifying predetermined data out of data that is provided for the user, and an identifier for identifying the transmission method correspondingly to this data ID stored. Specifically, as shown in Fig. 2, with a set having ┌A: data ID="http://www.aaa/bbb/*"┘ described, the transmission method ID thereof at the time that the condition that ┌data ID="http://www.aaa/bbb/*"┘ has been satisfied is ┌A┘.

As the transmission method, there exist the transmission methods in which ┌a transmission source is notified┘, and in which ┌no transmission source is notified┘, and the transmission method in which the telephone cost is separately charged. Additionally, as a method of generating a telephone transmission request based upon the transmission method, various methods are thinkable; however the arbitrary method, which is executable by the transmission request processing unit 250, is acceptable.

When a data processing unit 230, with data output to the user, receives a telephone transmission request due to a user's operation for input support information caused to correspond to a telephone number via an inputer/outputer 220, the former extracts information of the telephone number from the received telephone transmission request. Specifically, telephone number information caused to correspond to the input support information is extracted.

Next, the data processing unit 230 generates a telephone transmission request including the extracted telephone number information and data ID information of data provided for the user, and transmits it to the transmission request processing unit 250.

The transmission request processing unit 250 receives the telephone transmission request from the data processing unit 230, extracts data ID information from the telephone transmission request, and determines a transmission method ID based upon the data ID information and information filed into the transmission judgment information storage unit 260.

And, the transmission request processing unit 250 generates a request for transmitting a telephone to a telephone number, which is included in the telephone transmission request, with the transmission method based upon the determined transmission method ID, and transmits it to the communication processing unit 240.

The process above allows the communication processing unit 240 to transmit a telephone based upon the specification.

Specifically, think about the case of transmitting a telephone with ┌1311┘ affixed to the head of number in transmitting a telephone with A of the transmission method ID shown in Fig. 2, and transmitting a telephone with ┌1312┘ affixed to the head of number in transmitting a telephone with B of the transmission method ID, thereby allowing the respective telephone costs to be charged separately.

In this case, the transmission request processing unit 250 generates a telephone transmission request to the number obtained by affixing ┌1311┘ to the head of the telephone number, being an object of transmission, in transmitting a telephone with the transmission method A, and generates a telephone transmission request to the number obtained by affixing ┌1312┘ to the head of the telephone number, being an object of transmission, in transmitting a telephone with the transmission method B, thereby making it possible to generate a telephone transmission request based upon the two kinds of the transmission methods.

In addition hereto, herein, it is assumed that the transmission judgment information storage unit 260 has the transmission judgment information shown in an example of Fig. 2 filed. It is assumed that, as an example of data, there exist data corresponding to the data ID shown by ┌http://www.aaa/bbb/c.html┘ and data corresponding to the data ID shown by ┌http://www.zzz/a.htm┘, and information of a telephone number ┌0312345678┘ is included in the former data and information of a telephone number ┌0612345678┘ in the latter data.

In this situation, it is assumed that while the data processing unit 230 outputs data caused to correspond to data ID ┌http://www.aaa/bbb/c.html┘, it has received a request for transmitting a telephone to the telephone number ┌0312345678┘ that is included in the above data.

In this case, it is determined that the transmission method is A because the data ID satisfies the condition ┌data ID="http://www.aaa/bbb/*"┘ (* indicates an arbitrary character or character row) of the transmission judgment information of Fig. 2.

Thus, the transmission request processing unit 250 transmits a request for transmitting a telephone to the telephone number ┌13110312345678┘ obtained by affixing ┌1311┘ to the telephone number to the communication processing unit 240, and the latter executes the transmitting of the telephone with the above telephone number.

Next, in this situation, it is assumed that while the data processing unit 230 outputs data caused to correspond to data ID ┌http://www.zzz/a.htm┘, it has received a request for transmitting a telephone to the telephone number ┌0612345678┘ that is included in the above data.

In this case, it is determined that the transmission method is B because the data ID satisfies the condition ┌other than the foregoing┘ of the transmission judgment information of Fig. 2.

Thus, the transmission request processing unit 250 transmits a request for transmitting a telephone to the telephone number ┌13120612345678┘ obtained by affixing ┌1312┘ to the telephone number to the communication processing unit 240, and the latter executes the transmitting of the telephone with the above telephone number.

A specific example of the present invention as mentioned above will be explained hereinafter.

### [Example 1]

Next, an example 1 of the present invention will be explained by making a reference to the accompanied drawings.

Fig. 1 is a view illustrating a major configuration of a communication system in the example 1 of the present invention.

The communication system of the example 1 of the present invention is configured of a server 100, a client 200, and a network 50 for connecting both. Additionally, a configuration may be made so that the server 100 and the client 200 exist in plural, respectively.

The server 100 has a function of retaining data.

The client 200 has a function of acquiring data from the server 100 to provide it for the user, and a function of making a telephone with the other client 200.

The network 50 is for realizing communication between the server 100 and the client 200, or between the client 200 companions.

Additionally, in Fig. 1, the network that is employed for communication of data, and the network for the telephone are listed without distinguishing each of them from the other; however a configuration may be made of employing different networks for both, respectively. As an example of the network that is employed for data communication, there exists Internet. Further, as an example of the network that is employed for the telephone communication, there exits a public network.

Various kinds of information are included in data, and the user who makes a reference to data utilizes its information. The arbitrary format of the data, which is recognizable by the client 200, is acceptable. As an example of the format of the data, there exists a hypertext markup language (HTML) format that is widely employed over Internet.

In acquiring data from the server 100, the client 200 identifies data by means of the data ID, being an identifier of data. The arbitrary format of the data ID, which is recognizable by the client 200, is acceptable. As an example of the format of the data ID, there exists a uniform resource indicator (URI) format that is widely employed over Internet.

In transmitting a telephone, the client 200 identifies the telephone number of the transmission destination by means of the telephone number. The arbitrary format of the telephone number, which is recognizable by the client 200, is acceptable. As an example of the telephone number, there exists a row of numerical values.

Additionally, there is also the case that in data is included information of a data ID of other data, which has some relation with the above data. Further, there is also the case that in data is included information of the telephone number, which has some relation with the above data.

Next, a configuration of the communication system of this example 1 will be explained in details.

The server 100 has a function of retaining data, and transmitting data specified based upon a request by the client 200 via the network 50.

The client 200 is configured of a communicator 210 having a function of making communication with the network 50, the inputter/outputter 220 having a function of carrying out an input/output into/to the user of the client 200, the data processing unit 230 having a function of performing a process associating with providing data for the user, the communication processing unit 240 having a function of making a telephone, the transmission request processing unit 250 having a function of, based upon a specification by the data processing unit 230, transmitting a telephone transmission request to the communication processing unit 240, and the transmission judgment information storage unit 260 having a function of filing information that is employed at the moment that the transmission request processing unit 250 determines the transmission method.

In the transmission judgment information storage unit 260 is filed information that is employed for, at the moment that the transmission request processing unit 250 transmits a telephone transmission request, determining its transmission method. Specifically, the transmission judgment information storage unit 260 has a condition, which is associated with the data ID of the data that the data processing unit 230 has provided at the time of the transmission request, and information of a set of the transmission methods, which corresponds to the above condition, filed. The transmission method is identified by means of the transmission method ID, being an identifier of the transmission method.

An example of the data that is filed into the transmission judgment information storage unit 260 is shown in Fig. 2.

For example, it is shown that, with a set having ┌A: data ID="http://www.aaa/bbb/*"┘ of this figure described, the transmission method ID thereof at the moment that the condition that ┌data ID="http://www.aaa/bbb/*"┘ has been satisfied is ┌A┘.

Next, an operation in the communication system of this example 1 will be explained in details.

The following four processes as a process that the client 200 executes are performed in the communication system of this example.

(A) Acquiring data from the server 100 based upon a user's specification, and providing it for the user.

(B) Transmitting a telephone based upon a user's specification.

(C) Acquiring data from the server 100 based upon a user's operation for data, and providing it for the user.

(D) Transmitting a telephone based upon a user's operation for data.

Hereinafter, the processes of (A) to (D) will be explained.

(A) Acquiring data from the server 100 based upon a user's specification, and providing it for the user.

This process is executed by the data processing unit 230 of the client 200.

Hereinafter, a flow of the operation of the data processing unit 230 will be explained by employing Fig. 3.

At first, the data processing unit 230 receives a data request from the user via the inputter/outputter 220 (step S11). As a method of receiving a data request, there exists, for example, the method of providing a user interface for inputting a character for the user to receive a data ID as character information from the user. Additionally, the data request to be received from the user, from which the data processing unit 230 is able to extract information of a data ID, is arbitrary in terms of its content.

Next, the data processing unit 230 extracts information of a data ID from the data request obtained in the step S11 (step S12).

Next, the data processing unit 230 requests data of an appropriate server 100 via the communicator 210 and the network 50 based upon the data ID extracted in the step S12, and acquires information caused to correspond to the above data ID from the above server 100 (step S13).

Next, the data processing unit 230 outputs the data obtained in the step S13 to the user via the inputter/outputter 220 (step S14). The data processing unit 230 appropriately controls the display method based upon the described content of the data in outputting the data.

Herein, the details of the output method in the case of including a data ID of other data with which data is associated, or information of the relevant telephone number will be described.

In a case of including information of a data ID of other data with which data is associated, the data processing unit 230 outputs input support information caused to correspond to the above data ID via the inputter/outputter 220 as information for the user's operation of the data request having the above data ID specified.

Further, in a case of including information of a telephone number with which data is associated, the data processing unit 230 outputs input support information caused to correspond to the above telephone number via the inputter/outputter 220 as information for the user's operation of the telephone transmission request having the above data ID specified.

The inputter/outputter 220 provides for the user the input support information in a form of being operatable by the user.

As an example of the form for providing the input support information, there exist, for example, the forms such as a link display and a button display that are selectable by the user. And, the inputter/outputter 220 handles the user's operation for the input support information as a request having the data ID or the telephone number caused to correspond hereto specified, and transmits it the data processing unit 230.

The process above allows the data processing unit 230 to provide data based upon the user's specification.
(B) Transmitting a telephone based upon a user's specification.

This process is executed by the communication processing unit 240 of the client 200.

At first, the communication processing unit 240 receives a telephone transmission request from the user via the inputter/outputter 220.

And, the communication processing unit 240 extracts telephone number information from the telephone transmission request, and executes a telephone transmission process based upon the telephone number information via the communicator 210.

The process above allows the communication processing unit 240 to transmit a telephone based upon the specification.
(C) Acquiring data from the server 100 based upon a user's operation for data, and providing it for the user.

This process is executed by the data processing unit 230 of the client 200.

This process is executed with a procedure identical to that of the process of ┌(A) Acquiring data from the server 100 based upon a user's specification, and providing it for the user┘ except the step S11.

At first, with data output to the user, the data processing unit 230 receives a data request due to the user's operation for the input support information caused to correspond to the data ID via the inputter/outputter 220.

The following operation is identical to the process in and after the step S12 in ┌(A) Acquiring data from the server 100 based upon a user's specification, and providing it for the user┘.

The process above allows the data processing unit 230 to provide data based upon the user's operation for data.
(D) Transmitting a telephone based upon a user's operation for data.

The data processing unit 230, the transmission request processing unit 250, and the communication processing unit 240 of the client 200 execute this process.

### (The process to be executed by the data processing unit 230)

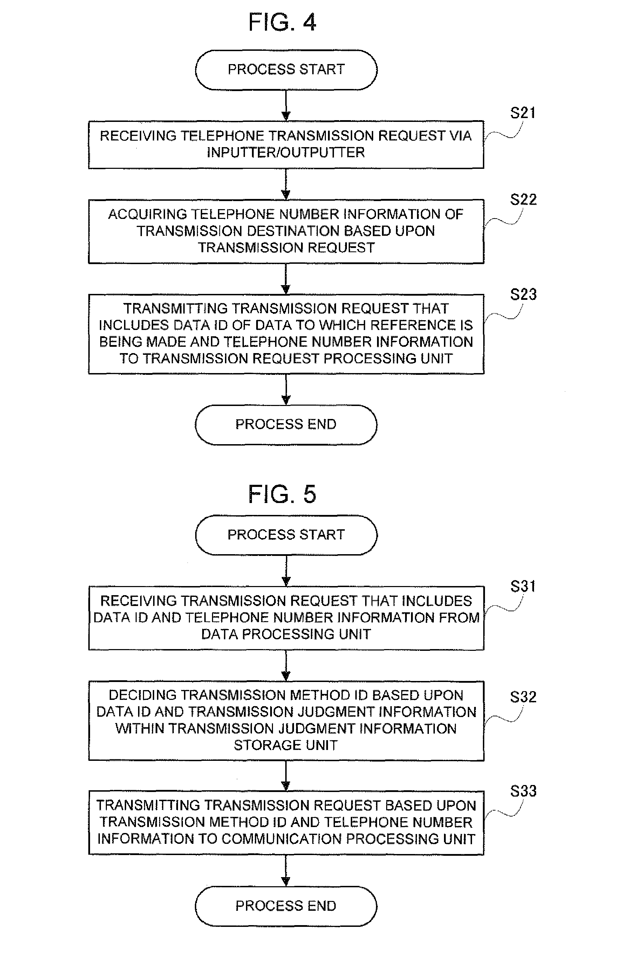

Hereinafter, a flow of the process that the data processing unit 230 performs will be explained by employing Fig. 4.

At first, with data output to the user, the data processing unit 230 receives a telephone transmission request due to the user's operation for the input support information caused to correspond to the telephone number via the inputter/outputter 220 (step S21).

Next, the data processing unit 230 extracts information of the telephone number from the telephone transmission request received in the step S21 (step S22).

Specifically, telephone number information caused to correspond to the input support information is extracted.

Next, the data processing unit 230 generates a telephone transmission request that includes the telephone number information extracted in the step S22 and the data ID information of the data provided for the user by the data processing unit 230 at a time point of the step S21, and transmits it to the transmission request processing unit 250 (step S23).

The process above is a process that is executed by the data processing unit 230.

### (The process to be executed by the transmission request processing unit 250)

Hereinafter, a process to be executed in the transmission request processing unit 250 will be explained.

Hereinafter, a flow of the process that the transmission request processing unit 250 performs will be explained by employing Fig. 5.

The transmission request processing unit 250 receives a telephone transmission request transmitted by the data processing unit in the step S23 (step S31).

Next, the transmission request processing unit 250 extracts data ID information from the telephone transmission request, and determines a transmission method ID based upon the above data ID information and information filed into the transmission judgment information storage unit 260 (step S32).

Next, the transmission request processing unit 250 generates a request for transmitting a telephone to a telephone number, which is included in the telephone transmission request, with the method based upon the transmission method ID determined in the step S32, and transmits it to the communication processing unit 240 (step S33).

Herein, as an example of the method of generating a telephone transmission request based upon the transmission method, there exists the method of assuming that telephone number obtained by affixing established number information to the head of the original telephone number is a telephone number, being an object of transmission.

For example, in a case of, as the transmission method, employing two kinds of the method in which ┌a transmission source is notified┘, and the method in which ┌no transmission source is notified┘, a request is generated for transmitting a telephone to the number obtained by affixing ┌186┘ to the head of the original telephone number in the former transmission method, and a request is generated for transmitting a telephone to the number obtained by affixing ┌184┘ to the head of the original telephone number in the latter transmission method, thereby making it possible to generate a telephone transmission request based upon the transmission method.

Further, as another example, in a case of employing two kinds of the methods, a request is generated for transmitting a telephone to the number obtained by affixing a specific numerical value row to the head of the original telephone number in one transmission method, and a request is generated for transmitting a telephone to the original telephone number in the other transmission method, thereby making it possible to generate a telephone transmission request based upon the transmission method.

Additionally, with the method of generating a telephone transmission request based upon the transmission method, various methods are thinkable; however the arbitrary method, which is executable by the transmission request processing unit 250, is acceptable.

The process above is a process that is executed by the transmission request processing unit 250.

### (The process to be executed by the communication processing unit 240)

Next, a process that the communication processing unit 240 performs will be explained.

The communication processing unit 240 receives a telephone transmission request transmitted by the transmission request processing unit 250 in the step S33.

And, the communication processing unit 240 extracts telephone number information from the telephone transmission request, and executes a telephone transmission process based upon the above telephone number information via the communicator 210.

The process above is a process that is executed by the communication processing unit 240.

The process above allows the client 200 to execute the telephone transmission process based upon the user' operation for data.

Herein, ┌(D) Transmitting a telephone based upon a user's operation for data┘ will be explained based upon a more specific example.

In this example, it is assumed that the data ID is described in a format of the URL.

Further, it is assumed that, in transmitting a telephone, the telephone cost in the case that 1311 has been affixed to the head of the number, and the telephone cost in the case that 1322 has been affixed are charged separately,

Further, it is assumed that the transmission request processing unit 250 employs this two kinds of the telephone transmission methods, and the respective transmission method IDs are A and B.

In this case, the transmission request processing unit 250 generates a request for transmitting a telephone to the number obtained by affixing ┌1311┘ to the head of the telephone number, being an object of transmission, in transmitting a telephone with the transmission method A, and generates a request for transmitting a telephone to the number obtained by affixing ┌1312┘ to the head of the telephone number, being an object of transmission, in transmitting a telephone with the transmission method B, thereby making it possible to generate a telephone transmission request based upon the two kinds of the transmission methods.

In addition hereto, herein, it is assumed that the transmission judgment information storage unit 260 has the transmission judgment information shown in Fig. 2 filed.

Further, it is assumed that, as an example of data, there exist data corresponding to the data ID shown by ┌http://www.aaa/bbb/c.html┘ and data corresponding to the data ID shown by ┌http://www.zzz/a.htm┘, and information of a telephone number ┌0312345678┘ is included in the former data and information of a telephone number ┌0612345678┘ in the latter data.

In this situation, it is assumed that while the data processing unit 230 outputs data caused to correspond to the data ID ┌http://www.aaa/bbb/c.html┘, it has received a request for transmitting a telephone to the telephone number ┌0312345678┘ that is included in the above data.

In this case, it is determined that the transmission method is A because the data ID satisfies the condition ┌data ID="http://www.aaa/bbb/*"┘ of the transmission judgment information of Fig. 2.

Thus, the transmission request processing unit 250 transmits a request for transmitting a telephone to the telephone number ┌13110312345678┘ obtained by affixing ┌1311┘ to the telephone number to the communication processing unit 240, and the latter executes the transmitting of the telephone with the above telephone number.

Next, in this situation, it is assumed that while the data processing unit 230 outputs data caused to correspond to the data ID ┌http://www.zzz/a.htm┘, it has received a request for transmitting a telephone to the telephone number ┌0612345678┘ that is included in the above data.

In this case, it is determined that the transmission method is B because the data ID satisfies the condition ┌other than the foregoing┘ of the transmission judgment information of Fig. 2.

Thus, the transmission request processing unit 250 transmits a request for transmitting a telephone to the telephone number ┌13120612345678┘ obtained by affixing ┌1312┘ to the telephone number to the communication processing unit 240, and the latter executes the transmitting of the telephone with the above telephone number.

As mentioned above, the system of the example 1 of the present invention makes it possible to control the transmission method based upon data to which the user is making a reference.

This scheme makes it possible to transmit a telephone with an appropriate method responding to data to which the user is making a reference.

Additionally, in the foregoing example, it was assumed that, in the process of (D), the process for setting a transmission method was all performed only by the transmission request processing unit 250.

However, the process for setting a transmission method may be performed in the communication processing unit 240 side.

Specifically, for example, it is also acceptable that the transmission request processing unit 250 generates a telephone transmission request having some identification information of the transmission method, which is identifiable by the communication processing unit 240, affixed, and the communication processing unit 240 changes the transmission method based upon the above identification information.

Thereby, in a case where the communication processing unit 240 itself has a function of changing a transmission method, it becomes possible for the transmission request processing unit 250 to put the above function into practice use, thereby to set a transmission method.

In addition hereto, in the foregoing example, only the data ID was employed, thereby to determine the transmission method in the step S32.

In the step S32, however, information other than the data ID may be employed for determining the transmission method.

As an example of information other than the data ID, there exist a telephone company in which the client 200 makes telephone communication, a manufacturing vendor and a type number of the client 200, the content of data, a classification of data, etc.

This makes it possible to execute a process of determining the transmission method of the step S32 based upon more diversified conditions.

In addition hereto, in the above-mentioned example, the transmission judgment information within the transmission judgment information storage unit 260 was fixed-manner information.

However, the user of the client 200, an external program etc. may update information filed into the transmission judgment information storage unit 260 via the inputter/outputter 220 and the communicator 210.

This makes it possible to dynamically update the determination process method with which the transmission request processing unit 250 performs the determination process.

### [Example 2]

An example 2 of the present invention will be explained.

As apparent from the explanation above, it is possible to configure the client 200 of the example 1 with hardware; however it is also possible to configure it with a computer program.

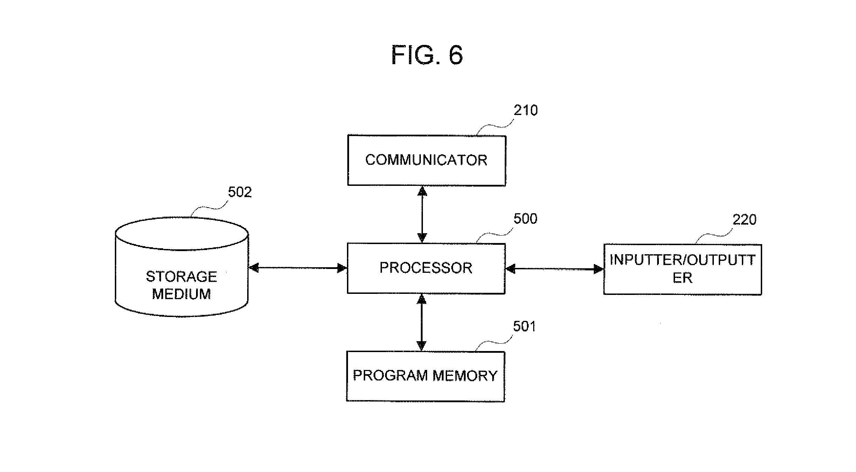

Fig. 6 is a general block configuration diagram of the information processing unit having one part of the client 200 implemented.

The information processing unit shown in Fig. 6 is comprised of a processor 500, a program memory 501, and a storage medium 502.

The storage medium 502, which is equivalent to the transmission judgment information storage unit 260 in the example 1, may be a separate storage medium, and may be a storage region that is comprised of the identical medium. As the storage medium, a magnetic storage medium such as a hard disc can be employed.

The program memory 501 has a program filed for causing the processor 500 to perform a process as the data processing unit 230, the communication processing unit 240, and the transmission request processing unit 250 in the foregoing example 1, and this program allows the processor 500 to operate, and to give an instruction to the communicator 210.

Additionally, a configuration may be made so that the processor 500 performs one part of the process of the communicator 210.

As apparent from the explanation above, it is also possible to realize an entirety or one part of the hardware by means of the computer program.

## Claims

1. A communication device, **characterized in** having:
input/output means for carrying out an input/output into/to a user;
data processing means having a function of providing data for the user;
communication processing means having a function of providing a telephone transmission function for the user; and
transmission request processing means has a function of requesting said communication processing unit to transmit a telephone with a transmission method based upon an identifier of the data that said data processing means has provided.

2. The communication device according to claim 1, **characterized in that** said data processing means has a function of, in having received a telephone transmission request having telephone number information, which is included in the data that has been provided, specified from the user, transmitting a telephone transmission request to said transmission request processing means.

3. The communication device according to one of claim 1 and claim 2, **characterized in that** said transmission request processing means has transmission judgment information storage means having a function of filing information that is employed for determining a transmission method.

4. The communication device according to one of claim 1 to claim 3, **characterized in that** said transmission request processing means has a function of employing information associated with said communication device and said data, being information other than an identifier of said data, in determining the transmission method.

5. The communication device according to one of claim 1 to claim 4, **characterized in that** said transmission request processing means has a function of, upon having manipulated a telephone number, being an object of transmission, with an established method based upon the decided transmission method, requesting that a telephone to said manipulated telephone number be transmitted.

6. A communication device, **characterized in** having:
storage means having a data identifier for identifying data, which is provided for a user, and a transmission method identifier for identifying a method of telephone transmission based upon said data, which is provided for said user, filed correspondingly to each other;
data processing means having a function of providing data for the user;
communication processing means having a function of providing a telephone transmission function for the user; and
transmission request processing means having a function of retrieving a transmission method identifier caused to correspond to a data identifier of the data, which said data processing means has provided, from said storage means, thereby to request said communication processing unit to transmit a telephone with a transmission method responding to this transmission method identifier.

7. A communication method of a communication device having a function of providing data for a user and a function of providing a telephone transmission function for the user,
**characterized in**:
receiving a request for transmitting a telephone from the user during providing of data;
deciding a telephone transmission method based upon an identifier of said data; and
transmitting a telephone based upon said telephone transmission method.

8. The communication method according to claim 7,
**characterized in**:
in providing the data for the user, based upon telephone number information to be included in the data, providing input support information for transmitting a telephone to said telephone number information; and
interpreting an operation for said input support information by said user as a telephone transmission request.

9. The communication method according to one of claim 7 and claim 8, **characterized in** filing information that is employed for a process of determining said telephone transmission method.

10. The communication method according to one of claim 7 to claim 9, **characterized in** employing information associated with said communication device and said data, being information other than said identifier of said data, in deciding said telephone transmission method.

11. The communication method according to one of claim 7 to claim 10, **characterized in** manipulating a telephone number, being an object of transmission, with an established method based upon said decision of said telephone transmission method, thereby to transmit a telephone.

12. A program of a communication device, **characterized in that** said program causes said communication device to function as:
input/output means for carrying out an input/output into/to a user;
data processing means having a function of providing data for the user;
communication processing means having a function of providing a telephone transmission function for the user; and
transmission request processing means having a function of requesting said communication processing unit to transmit a telephone with a transmission method based upon an identifier of the data that said data processing means has provided.

13. The program of a communication device according to claim 12, **characterized in that** said program causes said data processing means to function as means for, in having received a telephone transmission request having telephone number information, which is included in the data that has been provided, specified from the user, transmitting the telephone transmission request to said transmission request processing means.

14. The program of a communication device according to one of claim 12 and claim 13, **characterized in that** said program causes said communication device to function as transmission judgment information storage means having a function of filing information that is employed in order for said transmission request processing means to decide a transmission method.

15. The program of a communication device according to one of claim 12 to claim 14, **characterized in that** said program causes said transmission request processing means to function so as to employ information associated with said communication device and said data, being information other than said identifier of said data, in deciding the transmission method.

16. The program of a communication device according to one of claim 12 to claim 15, **characterized in that** said program causes said transmission request processing means to function so as to manipulate a telephone number, being an object of transmission, with an established method based upon the decided transmission method, and thereafter to request that a telephone to said manipulated telephone number be transmitted.

17. A program of a communication device, **characterized in that** said program causes said communication device to function as:
data processing means having a function of providing data for the user;
communication processing means having a function of providing a telephone transmission function for the user; and
transmission request processing means having a function of, from storage means having a data identifier for identifying data that is provided for a user, and a transmission method identifier for identifying a method of telephone transmission based upon said data that is provided for said user filed correspondingly to each other, retrieving a transmission method identifier caused to correspond to a data identifier of the data that said data processing means has provided, thereby to request said communication processing unit to transmit a telephone with a transmission method responding to this transmission method identifier.

18. A program of a communication device, **characterized in that** said program causes said communication device to execute the processes of:
receiving a request for transmitting a telephone from a user during providing of data;
deciding a telephone transmission method based upon an identifier of said data; and
transmitting a telephone based upon said telephone transmission method.

19. The program of a communication device according to claim 18, **characterized in that** said program causes said communication device to execute the processes of:
in providing the data for the user, based upon telephone number information that is included in the data, providing input support information for transmitting a telephone to said telephone number information; and
interpreting an operation for said input support information by said user as a telephone transmission request.

20. The program of a communication device according to one of claim 18 and claim 19, **characterized in** having information filed, said information being employed for a process of deciding said telephone transmission method.

21. The program of a communication device according to one of claim 18 to claim 20, **characterized in** employing information associated with said communication device and said data, being information other than said identifier of said data, in deciding said telephone transmission method.

22. The program of a communication device according to one of claim 18 to claim 21, **characterized in that** said program causes said communication device to execute a process of manipulating a telephone number, being an object of transmission, with an established method based upon said decision of said telephone transmission method, thereby to transmit a telephone.

## Amended claims

### Amended claims under Art. 19.1 PCT

**1.** (Amended) A communication device, **characterized in** having:
storage means having a data identifier for identifying data, which is provided for a user, and a transmission method identifier for identifying a method of telephone transmission based upon said data, which is provided for said user, filed correspondingly to each other;
data processing means having a function of providing data including telephone number information for the user;
communication processing means having a function of providing a telephone transmission function for the user; and
transmission request processing means having a function of retrieving a transmission method identifier caused to correspond to a data identifier of the data, which said data processing means has provided, from said storage means, thereby to request said communication processing unit to transmit a telephone with a transmission method responding to this transmission method identifier, in case of receiving a telephone transmission request from the user.

**2.** (Cancelled)

**3.** (Cancelled)

**4.** (Amended) The communication device according to claim 1, **characterized in that** said transmission request processing means has a function of employing information associated with said communication device and said data, being information other than an identifier of said data, in determining the transmission method.

**5. (Amended)** The communication device according to claim 1 or claim 4, **characterized in that** said transmission request processing means has a function of, upon having manipulated a telephone number, being an object of transmission, with an established method based upon the decided transmission method, requesting that a telephone to said manipulated telephone number be transmitted.

**6.** (Cancelled)

**7.** (Amended) A communication method of a communication device having a function of providing data for a user and a function of providing a telephone transmission function for the user, **characterized in**:
receiving a request for transmitting a telephone from the user during providing of data;
in case of receiving said request, deciding a telephone transmission method based upon data identifier that identify said data; and
transmitting a telephone processing based upon said telephone transmission method.

**8.** The communication method according to claim 7,
**characterized in**:
in providing the data for the user, based upon telephone number information to be included in the data, providing input support information for transmitting a telephone to said telephone number information; and
interpreting an operation for said input support information by said user as a telephone transmission request.

**9.** (Cancelled)

**10.** (Amended) The communication method according to claim 7 or claim 8, **characterized in** employing information associated with said communication device and said data, being information other than said identifier of said data, in deciding said telephone transmission method.

**11.** The communication method according to claim 7, claim 8 or claim 10, **characterized in** manipulating a telephone number, being an object of transmission, with an established method based upon said decision of said telephone transmission method, thereby to transmit a telephone.

**12.** (Amended) A program of a communication device, **characterized in that** said program causes said communication device to function as:
storage means having a data identifier for identifying data, which is provided for a user, and a transmission method identifier for identifying a method of telephone transmission based upon said data, which is provided for said user, filed correspondingly to each other;
data processing means having a function of providing data including telephone number information for the user;
communication processing means having a function of providing a telephone transmission function for the user; and
transmission request processing means having a function of retrieving a transmission method identifier caused to correspond to a data identifier of the data, which said data processing means has provided, from said storage means, thereby to request said communication processing unit to transmit a telephone with a transmission method responding to this transmission method identifier, in case of receiving a telephone transmission request from the user.

**13.** (Cancelled)

**14.** (Cancelled)

**15.** (Amended) The program of a communication device according to claim 12, **characterized in that** said program causes said transmission request processing means to function so as to employ information associated with said communication device and said data, being information other than said identifier of said data, in deciding the transmission method.

**16.** (Amended) The program of a communication device according to claim 12 or claim 15, **characterized in that** said program causes said transmission request processing means to function so as to manipulate a telephone number, being an object of transmission, with an established method based upon the decided transmission method, and thereafter to request that a telephone to said manipulated telephone number be transmitted.

**17.** (Cancelled)

**18.** (Cancelled)

**19.** (Cancelled)

**20.** (Cancelled)

**21.** (Cancelled)

**22.** (Cancelled)
